Europäisches Patentamt

European Patent Office

Office européen des brevets

(11) Publication number: 0 337 795
A2

# EUROPEAN PATENT APPLICATION

(21) Application number: 89303702.8

(22) Date of filing: 13.04.89

(51) Int. Cl.⁴: H 04 Q 7/04
G 08 B 3/10

(30) Priority: 15.04.88 JP 93113/88

(43) Date of publication of application:
18.10.89 Bulletin 89/42

(84) Designated Contracting States: DE GB SE

(71) Applicant: KABUSHIKI KAISHA TOSHIBA
72, Horikawa-cho Saiwai-ku
Kawasaki-shi Kanagawa-ken 210 (JP)

(72) Inventor: Nakazawa, Takeo Intellectual Property Div.
Toshiba Corporation 1-1-1 Shibaura
Minato-ku Tokyo (JP)

Sekigawa, Tatsuaki Intellectual Property Div.
Toshiba Corporation 1-1-1 Shibaura
Minato-ku Tokyo (JP)

Wagai, Kiyoshi Intellectual Property Div.
Toshiba Corporation 1-1-1 Shibaura
Minato-ku Tokyo (JP)

(74) Representative: Shindler, Nigel
BATCHELLOR, KIRK & EYLES 2 Pear Tree Court
Farringdon Road
London EC1R 0DS (GB)

(54) A paging apparatus without a power switch.

(57) A paging apparatus having no power switch connected to the battery is provided. The paging apparatus includes a receiver for receiving signals broadcast over one or more radio channels. A detachable first memory stores one or more identification numbers corresponding to the paging apparatus. A manually operable switch is provided primarily for switching a user selectable operating condition of the paging apparatus, such as the alarm mode, i.e., switching from an audible/visual alarm to a visual alarm. A second memory stores the identification number transferred from the first memory and a control circuit is responsive to actuation of the manually operable switch to initiate the transfer of the identification number stored in the first memory to the second memory. A signal detecting circuit coupled to the receiver and second memory detects a paging signal having an identification number corresponding to the identification number stored in the second memory, and generates an alarm signal

Fig. 3.

## Description

## A PAGING APPARATUS WITHOUT A POWER SWITCH

### FIELD OF THE INVENTION

This invention relates to a pager which receives paging signals broadcast from a base station and more specifically to a pager having no power switch.

### DESCRIPTION OF THE RELEVANT ART

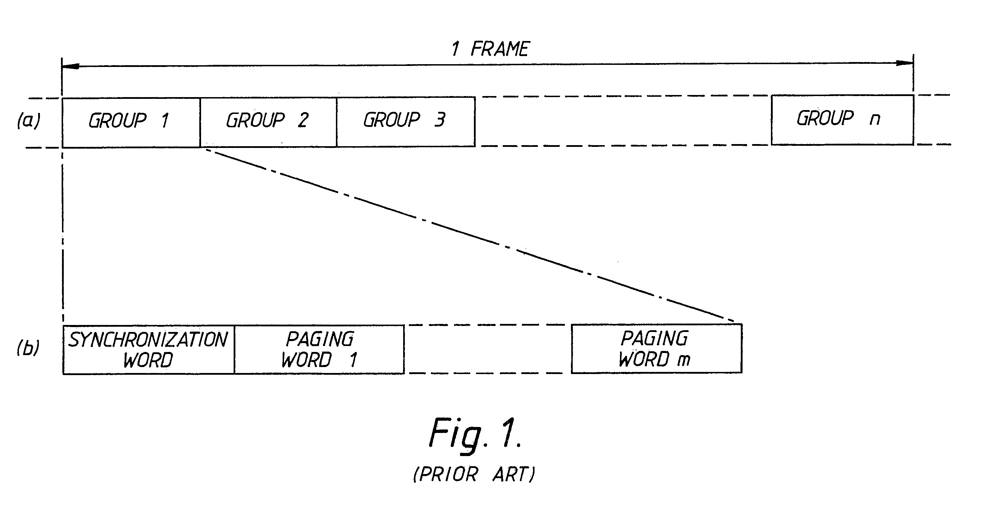

In a conventional paging system, paging signals are broadcast in the form shown in Figure 1. A frame of paging signals, which is time divided into a plurality of group signals (n groups in the Figure), is repeatedly broadcast for each geographical zone. Each group signal is further time divided into synchronization words and a plurality of paging words (m words in the Figure). The identification number codes of a plurality of pagers are inserted in these paging words and transmitted from the base station.

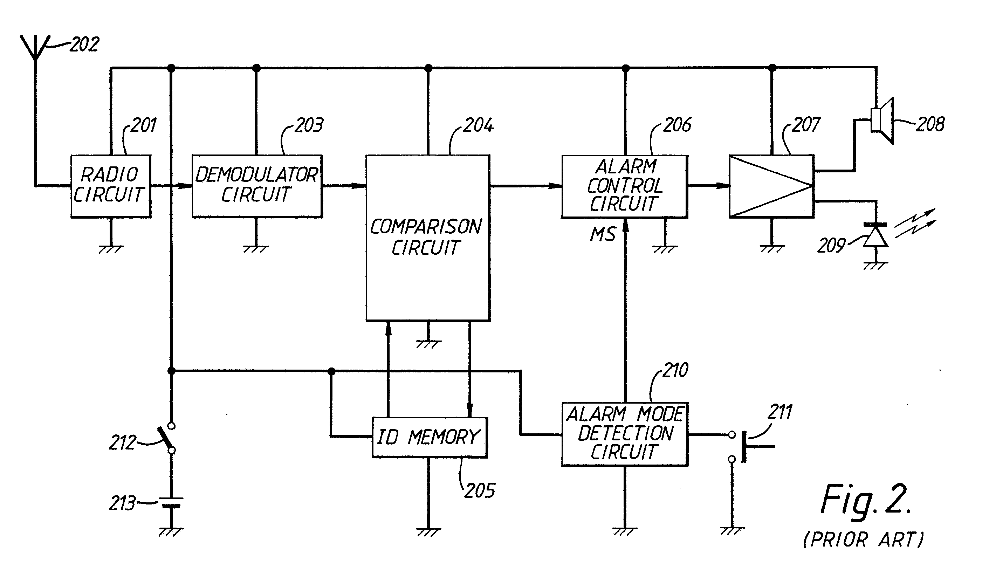

A conventional pager is shown in Figure 2 which includes antenna 202 and radio circuit 201 for receiving paging signals transmitted from a base station. These paging signals are demodulated by demodulator circuit 203 which regenerates the identification number codes contained within the paging signals. These identification number codes are fed to comparison circuit 204. Also, the identification number code of the pager itself is fed to comparison circuit 204 from non-volatile ID memory 205. In comparison circuit 204, the received identification number codes are compared with the identification number code from ID memory 205. If these two identification number codes match, the comparison circuit generates a match signal indicating that a call intended for the pager has been received, and supplies this match signal to alarm control circuit 206. This causes alarm control circuit 206 to generate an alarm signal which is supplied to drive circuit 207 to drive speaker 208 and light emitting diode 209 thereby generating an audible tone and a flashing light.

Conventional pagers like the one shown in Figure 2 generally include an alarm mode circuit for changing the alarm mode from a combination of an audible and visual alarm to only a visual alarm. In Figure 2, alarm mode detection circuit 210 detects the condition of alarm mode change-over switch 211. When alarm mode change-over switch 211 is closed, alarm mode detection circuit 210 supplies a change-over signal to alarm control circuit 206 which changes the alarm mode to a silent alarm mode in which only a flashing visual alarm is produced. Additionally, as shown in Figure 2, it is conventional to provide a power switch such as switch 212 connecting battery 213 to each element of the circuit of the pager.

In a pager of the type shown in Figure 2, it is often desirable to alter the identification number code stored in ID memory 205. Since ID memory 205 generally is a ROM, this is generally accomplished by replacing ID memory 205. The transfer of the new identification number code from the replacement ID memory 205 to comparison circuit 204 is performed by the initialization operation on power-up of the power source. For example, in the case of the pager of Figure 2, upon closing power switch 212 after replacement of ID memory 205, the identification number code from ID memory 205 is read by comparison circuit 204 and loaded into a memory portion of comparison circuit 204. As a result, the identification number code stored in the memory portion of comparison circuit 204 is rewritten.

Recently, in order to further simplify and reduce the size of pagers, pagers have been developed in which the power supply is turned on and off upon connection of the battery. No power switch is provided. In such a pager, when it is desired to alter the identification number code by replacing it with a new identification number code, since there is no power switch, the operation must be performed by removing the lid of the battery holder, taking out the battery, and reconnecting the battery. This operation is cumbersome, inconvenient and subject to error on the part of the user.

### SUMMARY OF THE INVENTION

It is an object of the present invention to provide a paging apparatus without a power switch in which operability is improved.

It is a further object of the present invention to provide an improved paging apparatus without a power switch in which the transfer of the identification number code from a replaceable ID memory can be performed without removing the battery.

Another object of the present invention is to provide a paging apparatus without a power switch in which transfer of the identification number from a replaceable ID memory to a control circuit can be accomplished by the user by using an already present manually operable switch. In this regard, no additional user operable hardware is required which would increase the cost and complexity of the paging apparatus.

To achieve one or more of the objects as embodied and described herein, the paging apparatus of the present invention includes a receiver for receiving signals broadcast over one or more radio channels. A detachable first memory stores one or more identification numbers corresponding to the paging apparatus. A second memory coupled to the first memory receives and stores the identification numbers stored in the first memory, and a signal detecting circuit coupled to the receiver and second memory detects a paging signal having an identification number corresponding to the identification number stored in the second memory. Upon correspondence between these identification numbers, an alarm circuit is actuated. A manually operable switch is provided primarily for switching a user selectable operating condition of the paging apparatus, such as the alarm mode, i.e., switching from an audible/visual alarm to a visual alarm. However, the manually operable switch has a second function. A control circuit is responsive to actuation of the manually operable switch to initiate the transfer of the identification number stored in the first memory to the second memory.

Unlike prior art paging apparatus, even though there is no power switch in the present invention, the transfer of identification numbers from a first memory to a second is performed without disconnection of the battery, and without the addition of another switch. Instead, a switch provided for changing a user selectable operating condition such as the alarm mode is used for a dual purpose, the second purpose being initiation of the transfer of the identification number. Consequently, when the first memory is replaced, a user of the paging apparatus can easily transfer the new identification number stored in the replacement first memory to the second memory by operating the already present manually operable switch.

## BRIEF DESCRIPTION OF THE DRAWINGS

Figures 1(a) and 1(b) are diagrams showing data formats used in a conventional paging system.

Figure 2 is a block diagram of a conventional paging apparatus.

Figure 3 is a block diagram of a paging apparatus according to an embodiment of the present invention.

## DETAILED DESCRIPTION OF THE PREFERRED EMBODIMENT

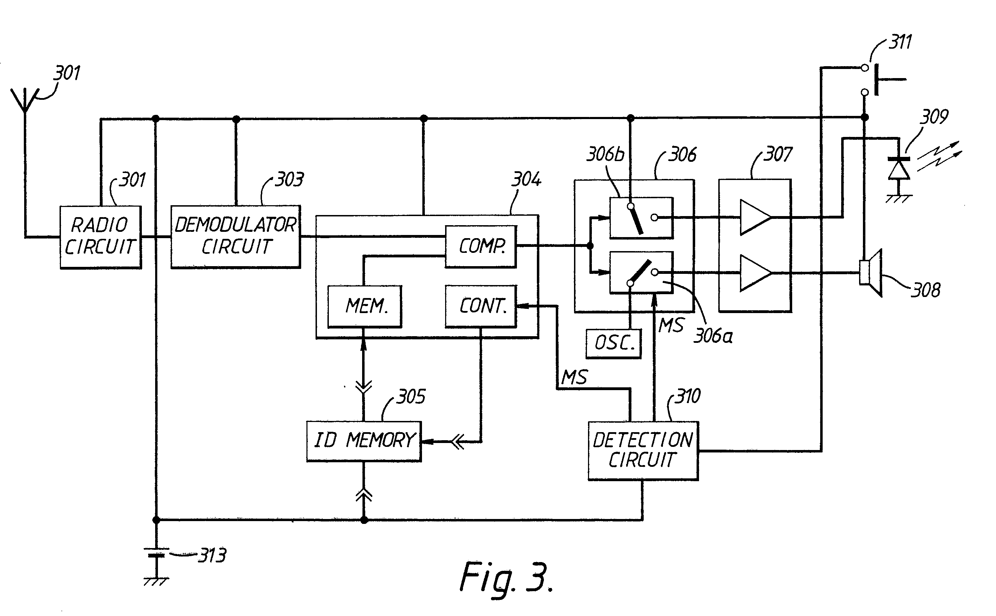

A preferred embodiment of the present invention will be described with reference to Figure 3 which shows a pager which includes antenna 301 and radio circuit 302 for receiving broadcast signals. Demodulator circuit 303 demodulates received signals and supplies a demodulated signal to microprocessor 304 which compares the received signals with the identification number code of the pager in comparison portion COMP of the microprocessor. ID memory 305, which is detachable and replaceable, stores an identification number code for the pager which is read in advance into a memory portion MEM of microprocessor 304. Microprocessor 304 controls the reading of data from ID memory 305 in control portion CONT.

Alarm control circuit 306 is coupled to microprocessor 304 for providing an alarm signal to alarm driver circuit 307 in response to the coincidence between the received identification number code and the stored identification number code. Driver circuit 307 drives loudspeaker 308 and light emitting diode 309. A manually operable alarm mode change-over switch 311 is provided for enabling the user to select the operating condition or alarm mode of the alarm circuit as described in further detail below. Detection circuit 310 detects the position of alarm mode change-over switch 311. While detection circuit 310 and alarm control circuit 306 are shown as separate elements, one of ordinary skill in the art would appreciate that the functions of these elements could be incorporated in the operation of microprocessor 304 by appropriately programming the microprocessor. Finally, battery 313 is provided for supplying power to all the elements of the pager.

In the pager of Figure 3, if alarm mode change-over switch 311 is operated by a user, it is detected by detection circuit 310. Detection circuit 310 provides a change-over signal MS to alarm control circuit 306 and microprocessor 304. Alarm control circuit 306 includes switch 306a which shuts off the audible alarm provided by speaker 308 in response to change-over signal MS. Alarm control circuit 306 also includes switch 306b connected to light emitting diode 309 to actuate light emitting diode 309 in response to a control signal generated by microprocessor 304. Additionally, detection circuit 310 supplies change-over signal MS to the control portion CONT of microprocessor 304 which in turn enables ID memory 305 to transfer the identification number stored therein to memory portion MEM of the microprocessor.

Accordingly, when a user operates alarm mode change-over switch 311 after replacement of ID memory 305, change-over signal MS is output from detection circuit 310 to enable microprocessor 304 to load the new identification number stored in replacement ID memory 305 in memory portion MEM of microprocessor 304. At this time, the identification number code that was previously stored in memory portion MEM is erased. It should be noted that, even if battery 313 is changed after replacement of ID memory 305, the rewriting of the identification number code to the memory portion of microprocessor 304 is again performed by the initialization routine of microprocessor 304.

According to the above-described embodiment of the present invention, transfer of the identification number code to the memory portion of microprocessor 304 from ID memory is performed in response to operation of alarm mode change-over switch 311 after replacement of ID memory 305. In this way, the operation of transferring the identification number code is greatly simplified compared with conventional pagers in which it is necessary to remove and remount battery 313. This prevents mounting battery 313 incorrectly because it is not necessary to remove battery 313 when ID memory 305 is replaced. Furthermore, since the identification number code also is transferred when battery 313 is mounted, if ID memory 305 is replaced prior to replacing battery 313, transfer of the new identification number code can be accomplished upon the subsequent replacement of battery 313.

This invention is not restricted to the above-mentioned embodiment. For example, a switch other than alarm mode change-over switch 311 may be used as the switch for transferring the identification number code. Any user actuated manual switch for selecting an operating condition of the pager may be used for the additional function of initiating the transfer of the new identification code from ID memory 305 to microprocessor 304 upon replacement of ID memory 305. In particular, if a manually operable switch is provided to control operation of a message display, as in a receiver equipped with a message display function, this switch may be used. Also, any switch already provided for designating a reception operation or alarm operation mode could be used. The present invention also contemplates that when transfer of the identification number code is complete, the circuit can be modified to provide an indication of the completion of transfer such as a flashing light or an audible tone having a different pattern than an alarm light or alarm tone.

**Claims**

1. Paging apparatus responsive to paging signals broadcast over at least one radio channel, the paging signals containing identification numbers identifying a particular paging apparatus, said paging apparatus comprising:
receiving means for receiving the paging signals;
first memory means for storing at least one identification number identifying the paging apparatus, said first memory means being detachable from the paging apparatus;
second memory means coupled to said first memory means for receiving and storing the identification number stored in said first memory means;
signal detecting means coupled to said receiving means and said second memory means for detecting a paging signal having an identification number corresponding to the identification number stored in said second memory means;
indicating means responsive to said signal detecting means for indicating correspondence between the identification number of the paging signal and the identification number of said second memory means;
a manually operable switch; and
control means for controlling a user selectable operating condition of the paging apparatus in response to the position of said manually operable switch, said control means further being responsive to the position of said manually operable switch for transferring the identification number stored in said first memory means to said second memory means upon operation of said manually operable switch.

2. The paging apparatus of claim 1 further comprising initialization means for transferring the identification number stored in said first memory means to said second memory means in response to the mounting and connection of a battery to the paging apparatus.

3. The paging apparatus of claim 1 wherein said indicating means is responsive to said control means for indicating to a user of the paging apparatus when the transfer of the identification number from said first memory means to said second memory means is completed.

4. The paging apparatus of claim 1 further comprising an audible alarm device forming part of said indicating means, and wherein the user selectable operating condition of said control means is the on/off condition of said audible alarm device.

5. The paging apparatus of claim 4 further comprising a visual alarm device forming part of said indicating means, said visual alarm device providing a visual indication upon every occurrence of correspondence between the identification number of the paging signal and the identification number of said second memory means.

6. The paging apparatus of claim 4 wherein said control means comprises switch detection means responsive to the position of said manually operable switch for generating a switching signal, and alarm control means responsive to the switching signal for enabling said audible alarm device.

7. The paging apparatus of claim 6 wherein said first memory means is responsive to the switching signal generated by said switch detection means to transfer the identification number stored in said first memory means to said second memory means.

8. Paging apparatus comprising:
receiving means for receiving paging signals broadcast over at least one radio channel;
memory means for storing at least one identification number identifying the paging apparatus, said memory means being detachable from the paging apparatus;
a manually operable switch;
switch detection means responsive to the position of said manually operable switch for controlling a user selectable operating condition of the paging apparatus;
control means coupled to said receiving means, said memory means and said switch detection means for reading out the identification number from said memory means and storing the identification number in said control means in response to the operation of said manually operable switch, said control means further generating an alarm signal when a paging signal containing an identification number corresponding to the identification number stored in said control means is received; and
signalling means responsive to the alarm signal for alerting a user of the apparatus under correspondence of the identification numbers of the paging signal and said memory means.

9. The paging apparatus of claim 8 wherein said control means further reads out the identification numbers from said memory means and stores the identification numbers in said control means in response to the mounting and connection of a battery to the paging apparatus.

10. Paging apparatus responsive to paging signals broadcast over at least one radio channel, the paging signals containing identification numbers identifying a particular paging apparatus, said paging apparatus comprising:
receiving means for receiving the paging signals;
memory means for storing at least one identification number identifying the paging apparatus, said first memory means being detachable from the paging apparatus;

a manually operable switch to change a user selectable operating condition of said paging apparatus;

control means coupled to said receiving means and said memory means for (1) receiving and storing the identification number stored in said memory means, (2) detecting a paging signal having an identification number corresponding to the identification number stored in said control means and generating an alarm signal, and (3) controlling a user selectable operating condition of the paging apparatus in response to the position of said manually operable switch, said control means further being responsive to the position of said manually operable switch for transferring the identification number stored in said memory means to said control means upon operation of said manually operable switch; and

indicating means responsive to said control means for indicating correspondence between the identification number of the paging signal and the identification number of said memory means.

11. The paging apparatus of claim 10 further comprising initialization means for transferring the identification number stored in said memory means to said control means in response to the mounting and connection of a battery to the paging apparatus.

12. The paging apparatus of claim 10 wherein said indicating means is responsive to said control means for indicating to a user of the paging apparatus when the transfer of the identification number from said memory means to said control means is completed.

13. The paging apparatus of claim 10 further comprising an audible alarm device forming part of said indicating means, and wherein the user selectable operating condition of said control means is the on/off condition of said audible alarm device.

14. The paging apparatus of claim 13 further comprising a visual alarm device forming part of said indicating means, said visual alarm device providing a visual indication upon every occurrence of correspondence between the identification number of the paging signal and the identification number of said second memory means.

15. The paging apparatus of claim 13 wherein said control means comprises switch detection means responsive to the position of said manually operable switch for generating a switching signal for enabling said audible alarm device.

16. The paging apparatus of claim 15 wherein said memory means is responsive to the switching signal generated by said control means to transfer the identification number stored in said first memory means to said control means.

1 FRAME

(a) | GROUP 1 | GROUP 2 | GROUP 3 | | GROUP n |

(b) | SYNCHRONIZATION WORD | PAGING WORD 1 | | PAGING WORD m |

*Fig. 1.*

(PRIOR ART)

EP 0 337 795 A2

Fig.2.

(PRIOR ART)

EP 0 337 795 A2

Fig. 3.

EP 0 337 795 A2